Europäisches Patentamt

European Patent Office

Office européen des brevets

(11) Veröffentlichungsnummer: **0 365 798**

**A1**

# EUROPÄISCHE PATENTANMELDUNG

(21) Anmeldenummer: **89116392.5**

(22) Anmeldetag: **05.09.89**

(51) Int. Cl.⁵: **A01K 1/015**

(30) Priorität: **25.10.88 DE 3836345**

(43) Veröffentlichungstag der Anmeldung:
**02.05.90 Patentblatt 90/18**

(84) Benannte Vertragsstaaten:
**AT BE CH DE FR GB IT LI NL**

(71) Anmelder: **YTONG AG**
**Hornstrasse 3**
**D-8000 München 40(DE)**

(72) Erfinder: **Figge, Karl, Dr.**
**Müllerkamp 11**
**D-2000 Wedel(DE)**
Erfinder: **Zerhau, Walter**
**Billwerder-Billdeich 441**
**D-2050 Hamburg 80(DE)**

(74) Vertreter: **Patentanwälte Dr. Solf & Zapf**
**Zeppelinstrasse 53**
**D-8000 München 80(DE)**

(54) **Tierstreu.**

(57) Die Erfindung betrifft eine Tierstreu aus einem körnigen, porösen, adsorbierenden Material, insbesondere aus im wesentlichen aus Calciumsilikathydrat bestehenden Material wie Gasbeton, die zur Verhinderung des Entstehens unangenehmer Gerüche mit mindestens einer antimikrobiell wirksamen Substanz ausgerüstet ist, wobei die antimikrobiell wirksamen Substanzen nicht halogenierte aromatische Kohlenwasserstoffe sind, die Bestandteil handelsüblicher Konservierungs-, Reinigungs-, Desinfektions- und/oder Textilhilfsmittel oder dgl. sind. Die Erfindung betrifft ferner ein Verfahren zur Herstellung einer Tierstreu wobei eine vorzugsweise Wirkstofflösung in einem Gewichtsverhältnis zwischen Wirkstofflösung und trockener Tierstreu, von kleiner als 1 : 20 verwendet wird.

EP 0 365 798 A1

## Tierstreu

Die Erfindung betrifft eine Tierstreu aus einem körnigen, porösen, absorbierenden Material, insbesondere aus im wesentlichen aus Calciumsilikathydraten bestehendem Material, wie z.B. Gasbeton, die zur Verhinderung der Bildung von Geruchsstoffen mit antimikrobiell wirksamen Stoffen ausgerüstet ist.

Tierstreu mit Geruchsinhibitoren sind seit langem bekannt. Als Geruchsinhibitoren werden in der Regel pH-senkende Mittel, wie z.B Säuren, Lösungen saurer Salze oder festen, körnigen, sauren Salzen verwendet, die eine unangenehme Geruchsentwicklung unterdrücken sollen, wenn die Tierstreu Fäkalien aufnimmt oder aufgenommen hat. Eine derartige Tierstreu ist beispielsweise in der DE-PS 31 21 403 und DE-PS 35 06 070 beschrieben. Durch die Herabsetzung des pH-Wertes wird nur die Aufspaltung der Harnsäure verhindet, die bei hohen pH-Werten unbeständig ist.

Wie allgemein bekannt, werden aber durch eine mikrobielle Zersetzung von bestimmten Bestandteilen des Katzenharns flüchtige, unangenehm riechende Stoffe freigesetzt. So wird der Harnstoff, der bis zu einer Konzentration von ca. 50 g/l im Katzenharn vorliegt, in Gegenwart von Wasser durch Bakterien in das geruchsintensive Ammoniak und in Kohlendioxid überführt:

$$O = C(NH_2)_2 + H_2O \rightarrow 2\ NH_3 \uparrow + CO_2 \uparrow$$

Bekannte harnstoffzersetzende Bakterien sind Spezies der aeroben sporenbildenden Stäbchen (z.B. Bacillus pasteurii und Sporosarcina ureae) der anaeroben Bacilli (Clostridium), der Gram-positiven aeroben bzw. fakultativ anaeroben nichtsporenbildenden Stäbchen (Corynebacterium) und der Gramnegativen aeroben nichtsporenbildenden Stäbchen (Pseudomonas). Hinsichtlich der Bildung von Geruch aus Katzenharn sind die Arthrobacter (Corynebacterium) besonders hervorzuheben, die in großer Zahl weit verbreitet im Boden vorkommen; von gleicher Bedeutung ist der als klassischer Harnstoffzersetzer geltende Bacillus pasteurii und der physiologisch ähnliche Sporosarcina urea.

Die Katze scheidet mit dem Harn neben Harnstoff u.a. auch geringe Mengen an Eiweiß und freien Aminosäuren aus. Diese Harnbestandteile werden ebenfalls auf mikrobiellem Wege - sofern sie z.B. die schwefelhaltigen Aminosäuren Cystein und Methionin enthalten - in Alkanthiole wie Methan- und Äthanthiol überführt, die einen äußerst penetranten Geruch besitzen und noch bei hoher Verdünnung in der Luft wahrnehmbar sind.

Es ist angesichts dieser Situation verständlich, daß Wege gesucht wurden, die mikrobielle Zersetzung des Harns zu verhindern, um damit die Bildung von Geruchsstoffen bzw. deren Ausbreitung in den Raum hinein zu verhindern. So bot es sich z.B. an, durch das Einbringen bestimmter Schwermetallsalze in das Material die bakterielle Urease für die Spaltung des im Katzenharn vorrätigen Harnstoffs, in das geruchsintensive Ammoniak verantwortlich ist, zu vergiften. Da jedoch viele Schwermetalle z.B. Pb, Hg, Cu, Zn, Cd, Ni nicht nur in elementarer Form, sondern vor allem in Form ihrer löslichen Salze stark toxisch und auch ökotoxisch sind, scheint dieser Weg nicht sehr sinnvoll zu sein, zumal nicht gesichert ist, daß weitere bakerielle Enzymsysteme, die z.B. die Umwandlung von Eiweiß und schwefelhaltigen Aminosäuren in geruchsintensive Alkantiole katalysieren, dadurch wirksam unterbunden werden. Eine derartige Tierstreu ist beispielsweise in der DE-PS 35 20 384 beschrieben, die jedoch die vorstehend geschilderten Nachteile hat.

Aus der europäische Patentanmeldung EP 109 275 ist eine Tierstreu aus festem absorbierenden Material bekannt, das mit einem bakeriostatischem Wirkstoff ausgerüstet ist, wobei halogenierte aromatische Kohlenwasserstoffe als Wirkstoffe eingesetzt werden. Die Verwendung halogenierter aromatischer Kohlenwasserstoffe als antibakterieller Wirkstoff ist aus ökotoxischen Gründen abzulehnen. Außerdem besteht die Schwierigkeit, eine genügend hoch konzentrierte Lösung herzustellen, wenn als Lösungsmittel aus kosten- und sicherheitstechnischen Gründen Wassr verwendet wird.

Aufgabe der Erfindung ist es daher, eine Tierstreu zur Verfügung zu stellen, die ohne Vermeidung der Nachteile der bekannten Lösungen eine antimikrobielle Ausrüstung hat.

Es wurde nun gefunden, daß diese Aufgabe erfindungsgemäß damit gelöst werden kann, daß das körnige, poröse, absorbierende Substrat mit einer wässrigen Lösung eines antimikrobiell wirksamen Stoffes besprüht wird, wobei es sich nicht um halogenierte Kohlenwasserstoffe handelt, und wobei als Lösungsvermittler Stoffe eingesetzt werden, die selbst eine antimikrobielle Wirkung haben.

Gegenstand der Erfindung ist eine Tierstreu aus einem körnigen, porösen, adsorbierenden Material, insbesondere aus im wesentlichen aus Calciumsilikathydrat bestehenden Material, wie z.B. Gasbeton, die mit antimikrobiellen Wirkstoffen, die Bestandteil der heute üblichen Konservierungs-, Reinigungs-, Desinfektions-, Textilhilfsmittel und dgl. sind, auszurüsten, wobei vor allem solche Wirkstoffe benutzt werden, die keine halogenierten aromatischen Kohlenwasserstoffe sind, die sich direkt oder aber in Form ihrer Kalium- bzw. Natriumsalze in Wasser lösen bzw. in Gegenwart von Lösungsvermittlern gelöst werden können. Als besonders wirksam zur antimikrobiellen Ausrüstung von Tierstreu erwies sich z.B. 2-Hydroxybiphenyl Natriumsalz Tetrahydrat. Dieser Wirkstoff ist direkt im Wasser löslich und kann somit ohne besondere Vorsichtsmaßnahmen durch Versprühen gleichmäßig über die Oberfläche von Streumaterial verteilt werden. Dadurch werden Produkte erhalten, die in ihrer geruchsverhindernden Wirkung optimal sind.

Ein weiteres wichtiges Kriterium für die Qualität eines Streumaterials ist dessen Saugfähigkeit - d.h. eine auf eine Massen- bzw. Volumeneinheit bezogene Aufnahmekapazität für Urin (Feuchtigkeitsaufnahme). Da die Aufnahmekapazität für Urin durch bereits vorhandenes Wasser reduziert wird, ist es zweckmäßig, beim Besprühen der Tierstreu wässrige Lösungen mit möglichst hohen Wirkstoffkonzentrationen einzusetzen. Es sollte daher das Gewichtsverhältnis zwischen Wirkstofflösung und trockener Tierstreu möglichst kleiner, keinesfalls aber größer als 1:20 sein. Wird die bekannte Wirksamkeit, z.B. des oben genannten Stoffes 2-Hydroxybiphenyl Natriumsalz Tetrahydrat, mit in Betracht gezogen, so ergibt sich, daß zur antimikrobiellen Ausrüstung eine wässrige Lösung zu verwenden ist, die als Mindestkonzentration ca. 0,5 M% enthält. Die Herstellung einer solchen rein wässrigen Applikation stößt jedoch auf erhebliche Schwierigkeiten, da die Löslichkeit der Stoffe in Wasser relativ gering ist.

Zur Beseitigung dieser Schwierigkeit können verschiedene Wege beschritten werden. So kann man das Wasser teilweise oder ganz durch eine gut lösende organische Flüssigkeit, wie Aceton oder Methanol, ersetzen. Jedoch würden im Falle des technischen Einsatzes solche aceton- und methanolhaltigen Wirkstofflösungen seitens der Arbeitsstoffverordnung sowie der Unfallverhütungsvorschriften kostspielige Auflagen bestehen.

Eine weitere Möglichkeit, die Schwierigkeiten zu umgehen, besteht darin, daß man die Wirkstoffe mit Hilfe sog. Lösungsvermittler in ausreichend hoher Konzentration in Wasser löst. Die auf diese Weise herstellbaren Wirkstofflösungen sind bezüglich ihrer technischen Verwendbarkeit mit rein wässrigen Lösungen vergleichbar. Überraschenderweise konnten Lösungsvermittler gefunden werden, die gute Lösungsvermittler für die antimikro biell wirksamen Stoffe sind und noch selbst bakteriostatische bzw. bakteriozide Eigenschaften haben. Bei diesen Lösungsvermittlern handelt es sich um organische Verbindungen, die im Wasser unter vollständiger Dissoziation leicht lösbar sind und gleichzeitig oberflächenaktive, dispergierende und auch desinfizierende Wirkung zeigen. Bei diesen als besonders geeignet gefundenen Lösungsvermittlern handelt es sich um quartäre Amoniumverbindungen von Typ der Benzolalkoliumchloride mit dem Trivialnamen Arquat DMMCB-50 und Morpan BC 50.

Weitere Merkmale und Vorteile der Erfindung ergeben sich aus dem nachfolgenden Ausführungsbeispiel:

Gasbeton wird gebrochen, klassiert, getrocknet, um ein Granulat mit folgender Kornverteilung zu erhalten:

< 5 mm : 95 bis 100 M%
< 4 mm : 85 bis 92 M%
< 3 mm : 63 bis 72 M%
< 2 mm : 33 bis 43 M%
< 1 mm : 8 bis 18 M%
< 0,5 mm : 1 bis 5 M%

Bei der Klassierung wird darauf geachtet, daß ein staubfreies Granulat erhalten wird.

Zur Herstellung der antimikrobiell wirksamen Lösung wurden 0,1870 g des Wirkstoffes bis zur vollständigen Lösung in 3,9054 g des Lösungsvermittlers Morpan BC 50 bei 50°C gerührt. Die entstandene klare Lösung wurde bei Raumtemperatur unter Rühren nach und nach mit insgesamt 34.0110 g Wasser verdünnt. Die Zusammensetzung der fertigen Wirkstofflösung war:
Wirkstoff:
2-Hydroxybiphenyl x Natriumsalz x 4 $H_2O$ = 0,49 M%
Lösungsvermittler:
Morpan BC 50 = 10,25 M%
Lösungsmittel:
Wasser = 89,26 Gew.%

Die Wirkstofflösung ist auch bei der Verwendung höherer Konzentrationen mindestens eine Woche stabil. Zur antimikrobiellen Ausrüstung des Gasbeton-Granulats wurden 12,5 ml der Wirkstofflösung auf 250 g Gasbetongranulat aufgesprüht.

Zur Überprüfung der Wirksamkeit der antimikrobiell behandelten Tierstreu wurde in Testkammern jeweils 200 g behandeltes und unbehandeltes Granulat gegeben und jeweils mit 100 ml Katzenharn beträufelt, der vorher gezielt mit Bodenkeimen kontaminiert wurde. Nach Zugabe des kontaminierten Harns wurde über sieben Tage lang mittels Gasspritzen Luftproben den geschlossenen Testkammern entnommen und unter Verwendung eines Infrarotdurchflußdetektors quantitativ auf den Gehalt an Ammoniak ($NH_3$) untersucht. Nach sieben Tagen wurden bei dem unbehandelten Material eine Peakfläche von 58 Skalenteilen x $10^6$ und bei dem behandelten Material eine Peakfläche von 4 Skalenteilen x $10^6$ gemessen. Dies beweist die hohe antimikrobielle Wirksamkeit des erfindungsgemäßen Verfahrens.

## Ansprüche

1. Tierstreu aus einem körnigen, porösen, adsorbierenden Material, insbesondere aus im we-

3

sentlichen aus Calciumsilikathydrat bestehenden Material wie Gasbeton, die zur Verhinderung des Entstehens unangenehmer Gerüche mit mindestens einer antimikrobiell wirksamen Substanz ausgerüstet ist, dadurch **gekennzeichnet,** daß die antimikrobiell wirksamen Substanzen nicht halogenierte aromatische Kohlenwasserstoffe sind, die Bestandteil handelsüblicher Konservierungs-, Reinigungs-, Desinfektions- und/oder Textilhilfsmittel oder dgl. sind.

2. Tierstreu nach Anspruch 1, dadurch **gekennzeichnet,** daß die Wirkstoffe direkt in Wasser löslich sind.

3. Tierstreu nach Anspruch 1 und/oder 2, dadurch **gekennzeichnet,** daß sie in Form ihrer Calium-bzw. Natrium-Salze in Wasser löslich sind.

4. Tierstreu nach einem oder mehreren der Ansprüche 1 bis 3, dadurch **gekennzeichnet,** daß die Stoffe in Gegenwart von Lösungsvermittlern in Wasser leicht löslich sind.

5. Tierstreu nach Anspruch 4, dadurch **gekennzeichnet,** daß der Lösungsvermittler ein Stoff ist, der selbst desinfizierende Wirkung hat.

6. Tierstreu nach Anspruch 5, dadurch **gekennzeichnet,** daß der Lösungsvermittler vom Typ der Benzalkoniumchloride ist.

7. Tierstreu nach Anspruch 6, dadurch **gekennzeichnet,** daß Lösungsvermittler Benzalkoniumchloridgemische mit dem Trivialnamen Aquart DMMCB-50 oder Morpan BC 50 in Mengen von 0,1 bis 0,8 M%, vorzugsweise 0,2 bis 0,5 M%, bezogen auf die Tierstreu, sind.

8. Tierstreu nach einem oder mehreren der Ansprüche 1 bis 7, dadurch **gekennzeichnet,** daß der antimikrobielle Wirkstoff 2-Hydroxybiphenyl x Natriumsalz x 4 H$_2$O in einer Menge von 0,005 bis 0,040 M%, vorzugsweise 0,01 bis 0,025 M%, bezogen auf die Tierstreu, ist.

9. Tierstreu nach einem oder mehreren der Ansprüche 1 bis 8, dadurch **gekennzeichnet,** daß das kör nige, poröse, absorbierende Material ein Gasbeton im Bereich der folgenden Kornverteilung ist:
< 5 mm : 95 bis 100 M%
< 4 mm : 85 bis 92 M%
< 3 mm : 63 bis 72 M%
< 2 mm 33 bis 43 M%
< 1 mm : 8 bis 18 M%
< 0,5 mm : 1 bis 5 M%

10. Verfahren zur Herstellung einer Tierstreu nach einem oder mehreren der Ansprüche 1 bis 9, dadurch **gekennzeichnet,** daß eine vorzugsweise Wirkstofflösung in einem Gewichtsverhältnis zwischen Wirkstofflösung und trockener Tierstreu von kleiner als 1 : 20 verwendet wird.

11. Verfahren nach Anspruch 10, dadurch **gekennzeichnet,** daß eine Wirkstofflösung verwendet wird, in der das Wasser teilweise oder ganz durch eine gut lösende, organische Flüssigkeit ersetzt ist.

12. Verfahren nach Anspruch 11, dadurch **gekennzeichnet,** daß das Wasser ganz oder teilweise durch Aceton ersetzt wird.

13. Verfahren nach Anspruch 11, dadurch **gekennzeichnet,** daß das Wasser ganz oder teilweise durch Methanol ersetzt wird.

14. Verfahren nach Anspruch 10, dadurch **gekennzeichnet,** daß mindestens ein Lösungsvermittler verwendet wird.

15. Verfahren nach Anspruch 14, dadurch **gekennzeichnet,** daß mindestens ein Lösungsvermittler verwendet wird, der bakteriostatische bzw. bakteriozide Eigenschaften hat.

16. Verfahren nach Anspruch 14 und/oder 15, dadurch **gekennzeichnet,** daß Lösungsvermittler verwendet werden, die organische Verbindungen sind, die in Wasser unter vollständiger Dissoziation leicht löslich sind und gleichzeitig oberflächenaktive dispergierende und auch desinfizierende Wirkungen haben.

17. Verfahren nach Anspruch 16, dadurch **gekennzeichnet,** daß als Lösungsvermittler Benzalkoniumchloridgemische mit dem Trivialnamen Aquart DMMCB-oder Morpan BC 50 verwendet werden.

18. Verfahren nach einem oder mehreren der Ansprüche 1 bis 17, dadurch **gekennzeichnet,** daß der antimikrobielle Wirkstoff zuerst im Lösungsvermittler gelöst wird, dieses Gemisch anschließend mit soviel Wasser verdünnt wird, daß eine einwandfreie Besprühung des Granulats gewährleistet ist, und anschließend die Wirkstofflösung gleichmäßig auf die Tierstreu aufgesprüht wird.

19. Verfahren nach einem oder mehreren der Ansprüche 1 bis 18, dadurch **gekennzeichnet,** daß als Wirkstoff 2-Hydroxybiphenyl x Natriumsalz x 4 H$_2$O verwendet wird.

20. Verfahren nach einem oder mehreren der Ansprüche 10 bis 19, insbesondere nach Anspruch 19, dadurch **gekennzeichnet,** daß der Wirkstoff in einer Menge von 0,005 bis 0,040 M%, vorzugsweise von 0,01 bis 0,025 M%, bezogen auf die Tierstreu, verwendet wird.

21. Verfahren nach einem oder mehreren der Ansprüche 10 bis 20, insbesondere nach Anspruch 17, dadurch **gekennzeichnet,** daß der Lösungsvermittler in einer Menge von 0,1 bis 0,8 M%, bezogen auf die Tierstreu, verwendet wird.

22. Verfahren nach einem oder mehreren der Ansprüche 10 bis 21, dadurch **gekennzeichnet,** daß Gasbeton verwendet wird, der die folgende Kornverteilung aufweist:
< 5 mm: 95 bis 100 M%
< 4 mm: 85 bis 92 M%
< 3 mm: 63 bis 72 M%
< 2 mm: 33 bis 43 M%

< 1 mm: 8 bis 18 M%
< 0,5 mm: 1 bis 5 M%

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| Y | EP-A-0 201 209 (OIL-DRI CORPORATION) <br> * Beispiele u. Ansprüche * <br> --- | 1-3 | A 01 K 1/015 |
| Y | EP-A-0 013 935 (EFFEM GmbH) <br> * Seite 3, Zeile 1-13; Beispiele und Ansprüche * <br> --- | 1-3 | |
| Y | GB-A-2 108 389 (Th.R. AUCHINCLOSS) <br> * Seite 2, Zeile 74-79; Ansprüche * <br> --- | 1-3 | |
| A | CA-A- 915 083 (LAVERNE WHITE) <br> * Ansprüche * <br> --- | 1,6 | |
| A | EP-A-0 109 275 (PROCTER & GAMBLE) <br> * Ansprüche * <br> ----- | 1 | |

RECHERCHIERTE SACHGEBIETE (Int. Cl.5)

A 01 K

Der vorliegende Recherchenbericht wurde für alle Patentansprüche erstellt

| Recherchenort | Abschlußdatum der Recherche | Prüfer |
|---|---|---|
| DEN HAAG | 10-01-1990 | GOLLER P. |